Europäisches Patentamt

European Patent Office

Office européen des brevets

(19)

(11)    **EP 1 248 526 B1**

(12)    **EUROPEAN PATENT SPECIFICATION**

(45) Date of publication and mention
of the grant of the patent:
**12.10.2005   Bulletin 2005/41**

(51) Int Cl.⁷: **A23B 5/005**, B65D 81/34,
A23L 1/32

(21) Application number: **99965979.0**

(22) Date of filing: **03.12.1999**

(86) International application number:
**PCT/US1999/028672**

(87) International publication number:
**WO 2001/039603 (07.06.2001 Gazette 2001/23)**

(54) **EGG PROCESSING SYSTEM AND METHOD OF USING SAME TO EXTEND THE REFRIGERATED SHELF LIFE OF LIQUID EGG PRODUCTS**

VERFAHREN ZUR BEHANDLUNG VON EIERN UND VERFAHREN ZUR HERSTELLUNG DERSELBEN ZUR VERLÄNGERUNG DER KÜHLHALTBARKEIT VON FLÜSSIGEN EIPRODUKTEN

SYSTEME ET PROCEDE POUR LE TRAITEMENT DES OEUFS VISANT A ETENDRE LA DUREE DE CONSERVATION DE PRODUITS D'OEUFS LIQUIDES REFRIGERES

(84) Designated Contracting States:
**AT BE CH CY DE DK ES FI FR GB GR IE IT LI LU MC NL PT SE**

(43) Date of publication of application:
**16.10.2002   Bulletin 2002/42**

(73) Proprietor: **Hamid-Samimi, Mohammad H.
El Cerrito, CA 94530 (US)**

(72) Inventor: **Hamid-Samimi, Mohammad H.
El Cerrito, CA 94530 (US)**

(74) Representative: **Goodenough, Nigel et al
A.A. Thornton & Co.
235 High Holborn
London WC1V 7LE (GB)**

(56) References cited:
**GB-A- 2 278 992        US-A- 3 579 631
US-A- 4 425 367        US-A- 6 024 999**

EP 1 248 526 B1

**Description**

The present invention relates in general to an improved method and apparatus for processing liquid egg and liquid egg products. More particularly, the invention relates to an improved pasteurization process and processing system for extending the refrigerated shelf life of pasteurized liquid egg and liquid egg products.

Pasteurized liquid whole egg products have been used for many years to replace shell eggs. Liquid whole egg products have generally been considered to be more convenient for use, especially on a large scale. Commercial egg products must be subjected to pasteurization processes to produce a pathogen-free food.

Pasteurization of egg products has been mandated by regulations in the United States and other countries so that the egg product is free of pathogenic bacteria. In the United States pasteurization is generally conducted at 140°F (60°C) for a period of at least 3.5 minutes. The objective of pasteurization of an egg product is to produce a salmonellae-negative product, although the number of other microorganisms is also reduced by this process.

Reference is made to an article by P.M. Foegeding and N.W. Stanley, "Growth and Inactivation of Microorganisms Isolated From Ultrapasteurized Egg," *Journal of Food Science,* vol. 52, No. 5, 1987, pp. 1219-1227, which indicates that there are several types of microorganisms found in raw egg products. For example, Pseudomonas sp, enterococcus sp, B circulans, and B. cereus isolate, are among such microorganisms which may be isolated from raw liquid whole egg.

There have also been many types and kinds of apparatuses and processes for pasteurizing food products. For example reference may be made to the patent publications: GB-2 278 992-A; US-2 565 311-A; US-2 936 240-A; US-3 232 769-A; US-3 404 008-A; US-3 579 631-A; US-3 615 659-A; US-3 738 847-A; US-3 843 825-A; US-4 490 401-A; US-4 511 589-A; US-4 627 994-A; US-4 946 041-A; US-5 019 408-A; US-5 048 404-A; and an article by H.R. Ball, Jr. et al., "Functionality and Microbial Stability of Ultrapasteurized, Aseptically Packaged Refrigerated Whole Egg," *Journal of Food Science,* vol. 52, No. 5, 1987, pp. 1212-1218.

Pasteurized liquid whole egg products with long shelf-life have been produced in the United States according to the teachings of several patents by Swartzel et al. and others as indicated above. The article by H.R. Ball, Jr. et al., describes a pasteurization process for liquid whole eggs where pasteurized product is subsequently aseptically packaged. Long shelf-life liquid pasteurized eggs are more convenient and have a better quality than frozen or dried egg products.

While such a process pasteurizes the egg, the aseptic packaging technique is restrictive in that only certain size and type of packages may be employed with apparatuses designed to achieve this task.

Therefore, it would be highly desirable to have a new and improved technique for pasteurizing raw liquid egg and liquid egg products that do not require aseptic packaging. Such a new and improved process should also permit the pasteurized liquid egg and liquid egg products to be packaged in different types and kinds of packaging, include packaging of different sizes and volumes.

US-2 565 311-A and US-2 936 240-A describe prior art whole egg pasteurization processes in which the steps of heating, chilling, and packaging occur in that order.

US-3 232 769-A shows a method of preparing eggs and food products in which the whites and yolks of eggs are separated, cooked, and then mixed with salad ingredients and lactic acid to adjust the pH of the mixture. Packaging and sealing occur followed by heating to a temperature of 170°F (77°C) to destroy harmful agents. This process essentially cooks the product, therefore it cannot be used to substitute liquid whole eggs.

US-3 404 008-A, US-3 579 631-A, and US-4 511 589-A teach processes for pasteurizing egg products which employ heat exchangers. Pasteurized egg products are packaged following the use of the apparatuses shown in these references. It has been found that heat exchangers tend to foul during such processes, although successful in pasteurizing the raw egg product.

US-5 167 976-A teaches a method of extending the shelf life of liquid egg product by employing a two step heating process followed by cooling and packaging.

US-3 843 813-A and US-5 290 583-A show radio frequency and electroheating techniques applied to pasteurization of liquid egg products.

US-4 994 291-A reveals a method of ultrapasteurizing liquid whole egg product employing time and temperature parameters. In this reference, liquid whole egg product is subjected to heat treatment described by an equivalent temperature method followed by aseptically packaging the liquid whole egg product. Applicant incorporates by reference US-4 994 291-A in its entirety in the present application.

Perhaps the most promising method and apparatus is disclosed in Great Britain patent publication GB-2 278 992-A. The GB patent publication discloses a method and apparatus where unpasteurized or pasteurized liquid egg is placed in a non-aseptic container that is then sealed and heated to a pasteurization temperature of between about 140°F and 155°F (between about 60°C and 68°C) and maintained for a predetermined period of time between about 3 minutes and about 30 minutes depending upon the initial pasteurization state of the liquid egg product.

While such a technique may help extend the shelf life of raw egg and raw liquid egg products, application of the technique is relatively expensive, and does not help throughput. In this regard, the cold fill system as disclosed in GB-2 278 992-A requires a long come-up time for the production throughput when the product and package are heated by conventional means. Moreover, while the application of other heating techniques such as radio frequency, microwave or heating by applying electricity may help increase throughput, such heating techniques are generally more expensive and require special types and kinds of heating equipment.

For example, a one-liter package of eggs at 40°F (4°C) requires about 30 to 45 minutes of heating time to reach a temperature of between about 145°F (about 63°C) and about 155°F (about 68°C). Thus, such a heating time requires a very lengthy heating tunnel, if the process is carried out on a commercial basis. Such a long heating time not only significantly increases processing time, but also requires a significant "come-up" time to reach a desired pasteurization temperature such a slow come-up time also may well damage the quality of the egg and may well not permit the egg product to be heated to a pasteurization temperature above 155°F (68°C). Also, if larger packages are utilized in a long tunnel, throughput time is further decreased due to the larger volumes of product to be pasteurized.

Therefore, it would be highly desirable to have a new and improved processing technique for extending the shelf life of a liquid egg and liquid egg products. Such a new and improved processing technique should significantly increase throughput and thus, help reduce the costs for processing such liquid egg products.

A method for processing liquid egg products which overcomes the disadvantages found in the prior art methods and apparatuses would be a notable advance in the food processing field.

Therefore the principle obj ect of the present invention is to provide a hot fill process for producing pasteurized liquid egg products which significantly extends the refrigerated shelf life of the product.

Another object of the present invention is to provide a hot fill process for producing pasteurized liquid egg products which overcomes the complexities of slow come up time which may limit the pasteurization processing temperatures employed to extend product shelf life.

A further object of the present invention is to provide a process for producing pasteurized liquid egg products which makes possible the use of packages having a variety of sizes, shapes, and materials not possible with the prior art methods of pasteurization of liquid egg products.

Another object of the present invention is to provide a process for producing pasteurized liquid egg products which obviates the possibility of post pasteurization contamination found in the prior art methods.

Yet another object of the present invention is to provide a process for producing pasteurized liquid egg product which eliminates expensive equipment needed to pasteurize liquid egg products in the prior art methods.

Another object of the present invention is to provide a process for producing pasteurized liquid egg product which is less expensive than methods practiced in the prior art

Briefly, the above and further objects of the present invention are realized by providing novel and useful process for producing pasteurized liquid egg and liquid egg products which have an extended shelf life at refrigerated temperatures.

According to one aspect of the present invention there is provided a process for extending the shelf life of a raw liquid egg product, comprising: preparing a given volume of the raw liquid egg product for subsequent consumption; heating the raw liquid egg product to a temperature level of at least 57°C such that pasteurisation of the raw liquid egg product begins; pumping the given volume of the heated raw liquid egg product into a container while the liquid egg product is maintained at said temperature level; sealing the container in a substantially air-tight manner to facilitate storage of the liquid egg product; transferring the sealed container to a heater to facilitate further in-package pasteurisation of the heated liquid egg product; continuing to maintain the temperature of the heated liquid egg product in the container at said temperature level for a first predetermined period of time of no longer than 60 minutes to complete the pasteurisation of the liquid egg product; and cooling the pasteurised liquid egg product for a second predetermined period of time to a refrigeration temperature of between 5°C and -2°C.

The present invention further provides hot fill process to increase production throughput in processing raw liquid egg products to increase their refrigerated shelf life to at least 36 weeks, comprising: preheating the liquid egg product to a preheated temperature of between 71°C and 55°C, which is sufficient to facilitate product pasteurisation; preheating a product container to a heat transfer temperature of between 71°C and 55°C, which is sufficient to significantly reduce holding temperature periods in a pasteurisation process; packaging the preheated liquid egg product in the preheated product container while preventing the preheated liquid egg product from cooling to a temperature below the range of said preheated temperature; holding the packaged liquid egg product at a constant pasteurisation temperature 15 of between 71°C and 55°C for a holding time period between 30 seconds and 2071 seconds; and removing rapidly a sufficient amount of thermal energy from the container and the liquid egg product in a cooling time period of between 5 minutes and 120 minutes to stabilize the package liquid egg product at a refrigeration temperature of between 5°C and -2°C without freezing the liquid egg product.

The process of the present invention anticipates the providing of liquid raw egg product in a tank or vat which is obtained in the conventional manner, i.e., by obtaining whole eggs, breaking the shells of the whole eggs to obtain the liquid product there within, and discarding the shells. The liquid raw egg product is then agitated and heated rapidly to a preheated packaging temperature of about 131°F (about 55°C) to about 160°F (about 71°C), without holding the product at a constant temperature. When the liquid egg or liquid egg product reaches the preheated packaging temperature, the product is transferred immediately into a non-aseptic container that is immediately sealed in an airtight manner. The product is then held at the final constant fill temperature for a holding period not to exceed hold periods as indicated by Equations 1 and 2 or Tables III and IV.

In another embodiment of the invention, the product may be heated to a lower pasteurization temperature, e.g. 140°F (60°C), packaged in a non-aseptic container, sealed and further heated to a higher pasteurization temperature of say 145°F (63°C), and then cooled. The heating time after the product is filled in the package must be less than the corresponding hold time for the fill temperature as indicated in Tables III and IV herein. The product may then be held at the final constant temperature for the corresponding hold time at that temperature. In another embodiment of the invention, once the preheated liquid egg or liquid egg product is sealed in the non-aseptic container, the temperature of the product need not be further increased. In this embodiment, the product heating time in the package is zero, as the containerized product is allowed to cool slowly from 160°F (71°C) to about 140°F (about 60°C) anywhere between 30 minutes to 2 minutes. Heating may take place through different methods, such as microwave, radio frequency (RF), ohmic heating, or through heat exchangers, or any suitable heating technique.

Although heating the product to the pasteurization temperature is achieved in a relatively short period of time of between about 3½ minutes and about 10 minutes, even shorter periods of heating may be achieved. In this regard, heating may take place through different methods such as microwave, radio frequency (RF), or ohmic heating, through heat exchangers, or any other suitable heating technique. Such other techniques may reduce the heating time period from about 10 minutes to about 4 minutes, and from about 3½ minutes to 30 seconds, or by direct hot matter (steam, water, egg, etc.) injection or infusion to obtain shorter heating times.

Following pasteurization, the containerized product is rapidly cooled at a rate sufficient to refrigerate the egg product in the container in order to inhibit germination of bacteria] spores therein. Agitation may be applied to the containers during the cooling of the prior heating steps in order to release or distribute heat evenly throughout the package and product. Such vibrational movement may be applied mechanically or through sonic methods. Moreover, the packaged egg product may then be shipped or stored while refrigerated. It has been found that the process of the present invention produces a liquid egg product with an extended shelf life without the restraints of aseptic packaging. Moreover, production throughout is significantly increased.

The above-mentioned and other objects and features of this invention and the manner of obtaining this will become apparent and tile invention itself will be best understood by reference to the following description of an embodiment of the invention taken in conjunction with the accompanying drawings, wherein:

FIG. 1 is a block diagram showing a method of the present invention; and
FIG. 2 is a block diagram showing an alternative method of the present invention.

DETAILED DESCRIPTION OF THE PREFERRED EMBODIMENT

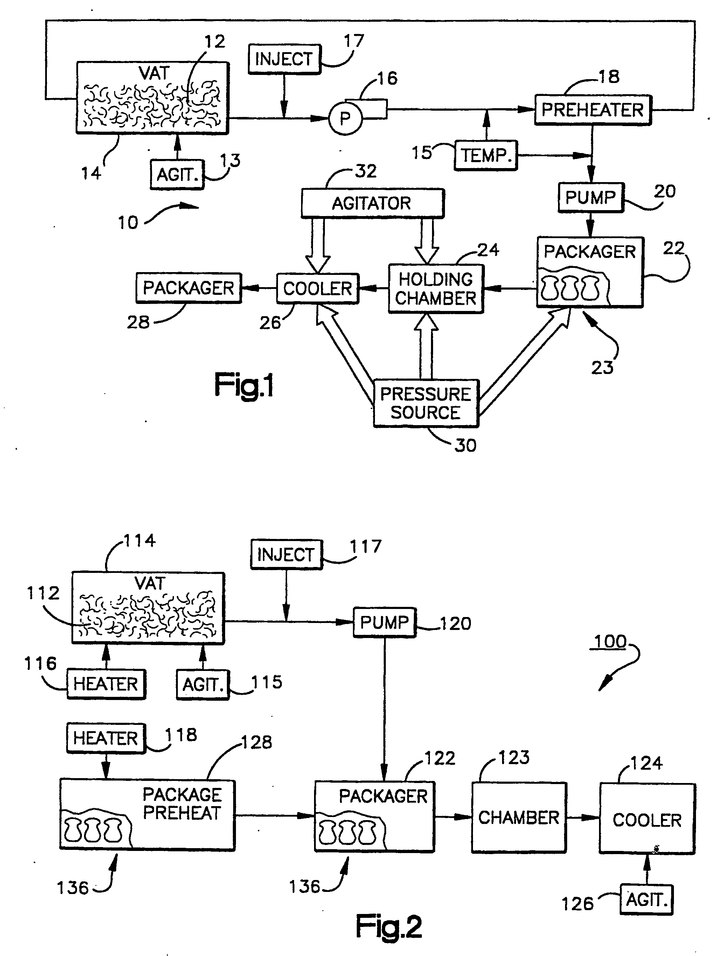

Referring now to the drawings, and more particularly to FIG. 1 thereof, there is shown schematically a hot fill process 10 for extending the shelf life of liquid egg and liquid egg products in accordance with the novel method of the present invention. The process 10 involves the provision of an egg product 12 which may be placed in a vat or tank 14 equipped with a mixer or agitator 13 for homogenizing the liquid egg or liquid egg product.

The product 12 may take the form of raw eggs, egg mixes, egg substitute, or liquid egg products which may be a combination of the above with or without the addition of color additives, particulates, dairy products, such as milk or cheese, color preservatives, such as citric acid, meat or vegetable products such as bacon bits, or any chemical additives, such as salt or salt-substitute. The vat 14 further serves as a source for a pump 16 which transfers raw liquid egg product 12 to a preheater 18.

A chemical injector 17 is employed at this preheating stage of the process to add bacteria destroying entities, such as hydrogen peroxide, in accordance with prior art methods. The raw homogenized liquid egg product 12 passing into preheater 18 is subject to heat which raises the temperature of the product 12 to a pasteurization temperature which is sufficient to commence killing the microorganisms contained within the vat 14 and the liquid egg product 12.

As will be explained in greater detail, the temperature of the product 12 is not held or maintained for a sufficient period of time to effect complete pasteurization. Instead, once the liquid egg or liquid egg product reaches a pasteurization temperature of about 135°F (about 57°C), as sensed by a temperature sensor 15, the contents of the vat 14 are evacuated into non-aseptic packages via another non-aseptic pump 20. In certain cases, a chemical entity such as hydrogen peroxide may be added to raw liquid egg product 12. Such addition tends to reduce the necessary temperature of pasteurization and tends to obviate coagulation of product 12. In other words, the raw egg product 12, without additional of chemical entity, may be raised to approximately 60°C (approximately 140°F) by direct or indirect heating, radio waves, microwaves, ohmic heating, and/or other suitable methods by the preheater 18.

Heating may be accomplished without coagulating the liquid egg product 12. The pump 20 transfers the heated liquid egg product from preheater 18 to a non-aseptic packager 22 where specific amounts of heated liquid egg product are placed in a plurality 23 of non-aseptic containers 23. Such containers 23 may take the form of plastic bottles, metal cans, plastic bags, glass jars, or any other type of packages which have air-tight integrity. In should also be noted that such packages are not possible with the cost and/or technical restrictions of aseptic packaging systems used in the prior art.

Once filled, the containers 23 are sealed in an air-tight manner and then discharged from the non-aseptic packager 22 and passed to a holding chamber 24 which maintains the pasteurization temperature by the circulation of air or liquid for a predetermined period of time that is sufficient to complete the pasteurization process. Since the product in the containers 23 was preheated to a non-holding pasteurization temperature, the time period to complete the pasteurization process is between about a half of a minute and about thirty five minutes. A more preferred time is between about three minutes and about ten minutes. The effect then, of preheating the product 12 helps to significantly increase throughout, which in turn helps reduce the cost of production.

Moreover, by preheating the liquid egg product, pasteurization temperatures of between about 131°F and 160°F (about 55°C and 71°C) can be achieved without product coagulation. Such a higher temperature is preferred for better bacteria kill and for helping to significantly increase shelf life of the product from a lower shelf life limits of about three weeks to a higher shelf life limit of about 36 weeks.

It will be understood by those skilled in the art that the preheated product 12 also initiates pasteurization of the non-aseptic containers 23, allowing the containers 23 to remain at a sufficiently high pasteurization temperature to pasteurize the container 23, which in turn helps to significantly increase the extended shelf life of the product 12.

Following the pasteurization holding period, the containers 23 are transferred from the chamber 24 to a cooler 26 where Such containers 23 are rapidly cooled to refrigeration levels that are sufficiently cool for helping to preserve the liquid egg product, but not sufficiently cool to freeze the liquid egg product. A preferred period for cooling is between about 1 minute or less and about 120 minutes. A more preferred period for cooling is between about 30 minutes and about 60 minutes and the most preferred period of time is about 45 minutes.

The containers 23 exit the cooler 26 are then sent to packager 28 which essentially combines containers 23 from packager 22 into larger containers for shipment and use. Pressure means 30 is depicted in FIG. 1 as applying an optional pressure to packager 22, holding chamber 24, and cooler 26. Pressure means 30 may take the form of a pressure chamber which would encompass packager 22, holding chamber 24, and cooler 26.

Agitator 32 is also depicted in FIG. 1 and may be applied to the containers 23 found in holding chamber 24 and cooler 26 in order to enhance heat exchange therein. That is to say, agitation would aid in the maintaining of heat in holding chamber 24 while the same agitation applied by agitator 32 would aid in the removal of heat from containers found within cooler 26.

While in the preferred embodiment of the present invention the liquid egg and liquid egg product is unsalted, it is contemplated within the true scope and spirit of the invention that small amounts of salt may be added for flavoring purposes. Such small amounts have no preservative effect and are typically between about 0.1% and about 0.15% by volume.

More particularly, those skilled in the art will understand that higher percentage of salt at levels of 2% and above in whole eggs severely limit the use of the product for commercial purposes and acts as a preservative in the egg products.

In another embodiment of the invention, the product may be heated to a lower pasteurization temperature e. g. 140°F (60°C), packaged in a non-aseptic container, sealed and further heated to a higher pasteurization temperature of say 145°F (63°C), and then cooled. The heating time after the product is filled in the package must be less than the corresponding hold time for the fill temperature as indicated in Tables III and IV herein.

Although heating the product and container at pasteurization temperature is achieved in a relatively short period of time of between about 3.5 minutes and about 10 minutes, even shorter periods of heating may be achieved. In this regard, heating may take place through different methods such as microwave, electric pulse, radio frequency (RF), or ohmic heating, through heat exchangers, or any other suitable heating technique. Such other techniques may reduce the longer period from about 10 minutes to about 4 minutes, and the shorter period to about one-half of a minute.

Following pasteurization, the containerized product is rapidly cooled at a rate sufficient to refrigerate the egg product in the container in order to inhibit germination of bacterial spores therein. Agitation may be applied to the containers during the cooling of the prior heating steps in order to release or distribute heat evenly throughout the package and product. Such vibrational movement may be applied mechanically or through sonic methods. Moreover, the packaged egg product may then be shipped or stored while refrigerated. It has been found that the process of the present invention produces a liquid egg product with an extended shelf life without the restraints of aseptic packaging. Moreover, production throughput is significantly increased.

Turning to FIG. 2, it may be observed that an alternate process 100 is described. Raw egg liquid product 112, such as egg yolks or egg whites or combinations thereof with other additives are provided in a vat 114. Again, a chemical injector 117 may be employed in the same manner as described in FIG. 1. While in the vat 114, the raw liquid egg product 112 is heated to a pasteurization temperature by a heater 116. The heated product 112 is held in the vat 114 at a constant temperature for less than 3.5 minutes and then is transferred to packager 122 via a pump 120 which fills a plurality of preheated non-aseptic containers 136. The containers 136 passed previously to a package heater 128 which is in the form of direct or indirect heating, radio waves, microwaves, immersion in hot fluid or air, and the like. The packager 122 is insulated for helping to maintain a constant temperature. The filled preheated containers 136 are then immediately sealed and passed via an insulted chamber 123 to a cooler 124 which rapidly removes heat from filled containers 136 to a refrigeration level temperature. The chamber 123 is well insulted. In this regard, heat is neither added nor removed from the containers 136 as they pass through the chamber 123. In short then, the chamber 123 helps hold the temperature of the containers 136 and the product contained therein at a substantially constant temperature.

It will be understood by those skilled in the art, that the containers 136 can pass through the chamber 123 in a very short period of time and thus, throughput production is greatly increased.

Again, agitators, such as an agitator 115 and agitator 126 may apply vibrational energy to the vat 114 and cooler 124 respectively, for the purposes of heat exchange.

The preheating of the containers 136 to a temperature of between about 131°F (about 55°C) to about 160°F (about 71°C) just prior to being filled with the preheated egg product 112, prevents the hot fill egg product from cooling to a temperature below a pasteurization temperature. In this regard, the combination of the hot fill egg product 112 and preheated containers 136 allows the complete pasteurization of both containers and egg product while traveling from the packager 122 to the cooler 124. Thus, there is no need for the application of additional heating once the hot egg product 112 has been sealed in an individual one of the containers 136.

From the foregoing, those skilled in the art should understand the primary benefit of this process allows different types and kinds of packaging, including packaging of different sizes and volumes. More specifically, package size has no effect on the time the filled container must be held at a pasteurization temperature. Instead, preheating both the package container and the egg product allows the pasteurization process to be completed in package in substantially the same period of time regardless of the package size. This is unique and novel greatly increasing production capacity which simultaneously increasing the refrigerated shelf life of the egg product to about 36 weeks.

In another embodiment of the invention, once the preheated liquid egg or liquid egg product is sealed in the non-aseptic container, the temperature of the product need not be further increased. In this embodiment, the product heating time in the package is zero, as the containerized product is allowed to cool slowly from 160°F (71 °C) to about 140°F (about 60°C) anywhere between 30 minutes to 2 minutes. Heating may take place through different methods, such as microwave, radio frequency (RF), ohmic heating, or through heat exchangers, or any suitable heating technique.

While in the foregoing, embodiments of the present invention have been set forth in considerable detail for the purposes of making a complete disclosure of the invention, it may be apparent to those of skill in the art that numerous changes may be made in such detail without departing from the spirit and principles of the invention.

EXAMPLE I

Two boxes containing 15 dozen poultry eggs were purchased commercially. The boxes of eggs were kept in an unheated room at outside ambient temperature on 6 September 1994, in Richmond, California. On the following day, 15 dozen of the eggs were broken from their shells and blended. The blended eggs were then transferred to a plastic jug and placed under refrigeration. The eggs at the time of blending possessed a B grade quality, i.e., the whites possessed visual firmness and air pocket size attributed to B grade eggs. Two days later 10 millimeters of raw commercial egg liquid, which was previously frozen on 17 May 1994, was added to the liquid egg product in the plastic jug to ensure contamination. Three liters of the liquid egg product were heated in a one gallon plastic jug which was placed in a hot water bath. After the liquid egg temperature reached 65°C, three one-liter plastic bottles were filled, sealed, and placed in hot water at 65°C to 67°C for 20 minutes. Following the 20 minute hold in the hot water bath, the three one-liter plastic bottles containing the liquid egg product were placed in a salt water and ice solution possessing a temperature of -2°C and agitated. The cooling and agitation extended for 17 minutes at which time the bottles were removed, rinsed in tap water, and placed in a refrigerator.

EXAMPLE 2

Egg samples were prepared in one-liter plastic bottles in the same manner as the samples found in Example 1, except that yolks and whites of the egg were kept in the same container without blending. Instead of bathing the samples in hot water, the samples of this example were heated in a microwave to 57°C to 60°C within 30 minutes, and then refrigerated.

EXAMPLE 3

A third sample was prepared on 15 September 1994 by filling two two-liter bottles with the raw liquid egg material prepared in Example 1. The raw liquid egg material of Example 1 was kept in a refrigerator between 9 September 1994, and 15 September 1994, thus the packaging of this third sample occurred approximately 6 days after the packaging of Example 1. The bottles of this example were heated to a temperature of about 57°C to 60°C in a microwave, placed in a hot water bath between 57°C and 60°C for 30 minutes, and then refrigerated.

EXAMPLE 4

Liquid egg product prepared in Example I was kept in a refrigerator for one week and retrieved on 15 September 1994. The liquid egg sample was placed into a two-liter bottle and mixed with 25% low-fat (2% fat) pasteurized milk. The bottle was heated in a microwave and held between 57°C and 60°C for 30 minutes and then cooled.

EXAMPLE 5

Hand broken eggs were placed into a plastic one-liter bottle directly without excessive agitation on 9 September 1994. The bottle was heated in a microwave to attain a temperature of 57°C to 60°C and held at 57°C to 60°C for 30 minutes. It was observed that some cooking of the egg product in the cap area of the bottle occurred due to low agitation, and microwave concentration effects.

The five samples of Examples 1-5 were evaluated organoleptically after approximately 60 days from the preparation of the samples found in Examples 3 and 4. The plastic bottles were uncapped from each of the samples and small amounts of the contents were poured into glasses for evaluation. The bottles were then recapped and placed in a domestic freezer for further bacterial testing. Each of the samples of Examples 1, 3, and 4 were also tested upon preparation and then 10-11 weeks later for microbial content. Table I represents the results. Samples of Examples 1-3 showed excellent results. Sample 4 included a rather high bacteria count which is believed due to the condition of milk in the product. Sample 5 is believed to have been contaminated by excessive heating in the cap area of the plastic bottle which may have activated spore forming bacteria or a micro-leak in the topseal. The latter possibility may have allowed bacteria to enter the container during cooling, contaminating the product.

EXAMPLE 6

A sample of Example 2 was retrieved 14 weeks from preparation. The product appeared to be in excellent condition having good color, smell, and cooked taste. Cake height tests were performed according to methods found in an article by H.R. Ball, Jr. et al., "Functionality and Microbial Stability of Ultrapasteurized, Aseptically Packaged Refrigerated Whole Egg," *Journal of Food Science,* vol. 52, No. 5, 1987, pp. 1212-1218.

TABLE I

| Ex. No. | | Raw (0 week) | Age (weeks) | | | |
|---|---|---|---|---|---|---|
| | | | 10 | 11 | 18-19 | 26-28 |
| I | Total Plate Count | 4000 | - | <10 | - | <10 |
| | Coliform Count | 9 | - | <3 | - | <3 |
| | Organoleptic | OK | - | OK | OK | OK |
| II | Total Plate Count | 4000 | - | <10 | - | <10 |
| | Coliform Count | 9 | - | <3 | - | < 3 |
| | Organoleptic | OK | - | OK | OK | OK |
| III | Total Plate Count | $6.20 \times 10^6$ | <10 | - | - | <10 |
| | Coliform Count | 240 | <3 | - | - | <3 |
| | Organoleptic | OK | OK | - | - | OK |

TABLE I   (continued)

| Ex. No. | | Raw (0 week) | Age (weeks) | | | |
|---|---|---|---|---|---|---|
| | | | 10 | 11 | 18-19 | 26-28 |
| IV | Total Plate Count | $4.10 \times 10^6$ | $2.50 \times 10^6$ | - | - | - |
| | Coliform Count | 240 | <3 | - | - | - |
| | Organoleptic | OK | OK | - | - | - |
| V | Total Plate Count | - | - | $5.70 \times 10^6$ | - | - |
| | Coliform Count | - | - | <3 | - | - |
| | Organoleptic | - | - | OK | - | - |

The following results were found according to Table II below.

TABLE II

| Cake No. | | Reading (CM) | | | |
|---|---|---|---|---|---|
| | | 1 | 2 | 3 | Average |
| 1. | Liquid Egg | 6.4 | 6.0 | 6.3 | 6.02 |
| 2. | Liquid Egg | 5.9 | 5.8 | 5.7 | |
| 3. | Shell Egg | 6.1 | 5.8 | 6.0 | 6.12 |
| 4. | Shell Egg | 6.0 | 6.5 | 6.3 | |

Based on the foregoing, a preferred process for extending the shelf life of a liquid egg product for subsequent consumption includes the following steps:

(1) Preparing a given volume of the unsalted liquid egg product for subsequent consumption;
(2) Preheating the unsalted liquid egg product via the preheater 18 to a processing temperature of at least 55°C for helping to reduce any microorganisms and spoilage bacteria contained within the product;
(3) Using non-aseptic packaging equipment such as the packager 22 and non-aseptic containers such as the container 23 for helping to reduce production costs;
(4) Without cooling the heated liquid egg product, packaging non-aseptically said given volume of the preheated unsalted liquid egg product in at least one substantially air tight non-aseptic container to help facilitate the storage of the unsalted liquid egg product;
(5) Transferring the non-aseptic container 23 to a heated holding chamber, such as the chamber 24;
(6) Maintaining the temperature within the holding chamber at a processing temperature of between about 60°C and about 71 °C for a predetermined period of time no greater than between about 35 minutes and about 1 minutes to pasteurize the liquid egg product and to substantially reduce any remaining microorganisms and spoilage bacteria contained therewith;
(7) Transferring the container 23 to a cooling chamber, such as the cooling chamber 26;
(8) Cooling the egg products within the container rapidly to a non-freezing temperature of between about 5 °C to about 0°C within another predetermined period of time of no greater than 120 minutes; and
(9) Transferring the cooled egg product containers to a refrigeration packager for refrigeration the unsalted liquid egg product at a non-freezing temperature to help inhibit germination of bacteria for an extended shelf life period of substantially greater than three weeks.

While the preferred embodiment, the product-package combination may be held at pasteurization temperature according to the mathematical relationship defined in equation (1):

$$(1) \qquad t_H = -262.62 + 53410 \ T_{H1} - 0.022990 \ T_{H2}$$

where $t_H$ is the hold time in minutes, and $T_{H1}$ and $T_{H2}$ are the hold temperatures in °F.
Alternatively, Table III can be used to determine the maximum hold time at each hold temperature. The points between these temperature may be calculated by interpolation.

TABLE III

| Hold Temp (°F) | Hold Time (min) | Hold Temp (°C) | Hold time (sec) |
|---|---|---|---|
| 140 | 34.5 | 60.0 | 2071 |
| 141 | 33.4 | 60.6 | 2004 |
| 142 | 32.2 | 61.1 | 1934 |
| 143 | 31.0 | 61.7 | 1861 |
| 144 | 29.8 | 62.2 | 1786 |
| 145 | 28.5 | 62.8 | 1708 |
| 146 | 27.1 | 63.3 | 1627 |
| 147 | 25.7 | 63.9 | 1543 |
| 148 | 24.3 | 64.4 | 1457 |
| 149 | 22.8 | 65.0 | 1367 |
| 150 | 21.3 | 65.6 | 1275 |
| 151 | 19.7 | 66.1 | 1181 |
| 152 | 18.1 | 66.7 | 1083 |
| 153 | 16.4 | 67.2 | 983 |
| 154 | 14.7 | 67.8 | 880 |
| 155 | 12.9 | 68.3 | 774 |
| 156 | 11.1 | 68.9 | 665 |
| 157 | 9.2 | 69.4 | 554 |
| 158 | 7.3 | 70.0 | 446 |
| 159 | 5.4 | 70.6 | 323 |
| 160 | 3.4 | 71.1 | 204 |
| 161 | 1.4 | 71.7 | 81 |

After holding, the product may be cooled to below 40°F (below 5°C), but above freezing (about 30°F or -2°C for whole egg product), in less than 120 minutes.

Liquid egg white products require a much gentler heat treatment to maintain their functionality. For such products, the following mathematical relation can be used:

$$(2) \qquad t_H = 122.12 - 0.87500\ T_H$$

Alternatively, Table IV can be utilized to determined the relationship.

TABLE IV

| Hold Temp (°F) | Hold Time (min) | Hold Temp (°C) | Hold Time (sec) |
|---|---|---|---|
| 131 | 7.5 | 55.0 | 450 |
| 132 | 6.6 | 55.6 | 397 |
| 133 | 5.7 | 56.1 | 345 |
| 134 | 4.9 | 56.7 | 292 |
| 135 | 4.0 | 57.2 | 240 |

TABLE IV   (continued)

| Hold Temp (°F) | Hold Time (min) | Hold Temp (°C) | Hold Time (sec) |
|---|---|---|---|
| 136 | 3.1 | 57.8 | 187 |
| 137 | 2.2 | 58.3 | 135 |
| 138 | 1.4 | 58.9 | 82 |
| 139 | 0.5 | 59.4 | 30 |

**Claims**

1. A process for extending the shelf life of a raw liquid egg product, comprising:

    preparing a given volume of the raw liquid egg product for subsequent consumption;
    heating the raw liquid egg product to a temperature level of at least 57°C such that pasteurisation of the raw liquid egg product begins; pumping the given volume of the heated raw liquid egg product into a container while the liquid egg product is maintained at said temperature level;
    sealing the container in a substantially air-tight manner to facilitate storage of the liquid egg product;
    transferring the sealed container to a heater to facilitate further in-package pasteurisation of the heated liquid egg product;
    continuing to maintain the temperature of the heated liquid egg product in the container at said temperature level for a first predetermined period of time of no longer than 60 minutes to complete the pasteurisation of the liquid egg product; and
    cooling the pasteurised liquid egg product for a second predetermined period of time to a refrigeration temperature of between 5°C and -2°C.

2. A process according to claim 1, further comprising:

    adding a chemical sterilizer following the step of preparing the given volume of the raw liquid egg product.

3. A process according to claim 1, wherein the liquid egg product is maintained at said temperature level by transporting the liquid egg product within the container to a thermal holding chamber.

4. A process according to any of claim 1 or claim 3, further comprising:

    transporting the cooled liquid egg product within the container to a refrigerator for maintaining the temperature of the liquid egg product substantially at the refrigeration temperature for an extended shelf life period.

5. A process according to any of the preceding claims, wherein the temperature level is between 65°C and 67°C, and/or wherein the first predetermined period of time is between 20 minutes and 60 minutes, preferably between 20 minutes and 30 minutes.

6. A process according to any of the preceding claims, further comprising:

    agitating the container during the step of maintaining the temperature of the heated liquid egg product in the container at the temperature level and/or agitating the container during at least a portion of the second predetermined period of time for helping to cool uniformly the liquid egg product.

7. A process according to any of tbe preceding claims, further comprising:

    applying pressure to the container during the step of maintaining the temperature of the container.

8. A process according to any of the preceding claims, further comprising:

    adding a given volume of a bacteria-destroying entity to the liquid egg product prior to heating the liquid egg product.

9. A process according to any of the preceding claims, wherein the second predetermined period of time is no greater than 17 minutes.

10. A process according to any preceding claim, further comprising:

   agitating the liquid egg product during the step of heating the liquid egg product.

11. A hot fill process to increase production throughput in processing raw liquid egg products to increase their refrigerated shelf life to at least 36 weeks, comprising:

   preheating the liquid egg product to a preheated temperature of between 71°C and 55°C, which is sufficient to facilitate product pasteurisation;
   preheating a product container to a heat transfer temperature of between 71°C and 55°C, which is sufficient to significantly reduce holding temperature periods in a pasteurisation process;
   packaging the preheated liquid egg product in the preheated product container while preventing the preheated liquid egg product from cooling to a temperature below the range of said preheated temperature;
   holding the packaged liquid egg product at a constant pasteurisation temperature 15 of between 71°C and 55°C for a holding time period between 30 seconds and 2071 seconds; and
   removing rapidly a sufficient amount of thermal energy from the container and the liquid egg product in a cooling time period of between 5 minutes and 120 minutes to stabilize the package liquid egg product at a refrigeration temperature of between 5°C and -2°C without freezing the liquid egg product.

12. A hot fill process according to claim 11, wherein the product container which is preheated is a non-aseptic container, and the container is sealed after it is filled.

13. A hot fill process according to claim 11, wherein said liquid egg product is an egg yolk product; and wherein said preheated temperature and said heat transfer temperature are each between 71°C and 60°C and wherein said holding time period is between 81 seconds and 2071 seconds.

14. A hot fill process according to claim 11, wherein said liquid egg product is an egg white product and wherein said preheated temperature and said heat transfer temperature are each between 59°C and 55°C.

15. A hot fill process according to claim 13, wherein said liquid egg product is an egg yolk product; and wherein said holding time period is between 30 seconds and 450 seconds.

16. A hot fill process according to claim 11 or claim 12, wherein said liquid egg product is an unsalted liquid egg product or is a liquid egg product including a small quantity of salt between 0.1% by volume and 0.15 % by volume.

17. A hot fill process according to any of claims 11-16, wherein a more preferred refrigeration temperature is between 0°C and 5°C and/or wherein a more preferred cooling time period is between 10 minutes and 45 minutes.

18. A process according to claim 11, wherein the extended shelf life is from a period greater than 10 weeks.


**Patentansprüche**

1. Ein Verfahren zur Verlängerung der Kühlhaltbarkeit von einem rohen flüssigen Eiprodukt, umfassend:

   Vorbereiten einer bestimmten Menge des rohen flüssigen Eiproduktes zur anschließenden Konsumierung;

   Erhitzen des rohen flüssigen Eiproduktes auf einer Temperaturstufe von mindestens 57° C, so dass die Pasteurisierung des rohen flüssigen Eiprodukts beginnt;

   Pumpen der bestimmten Menge des erhitzten rohen flüssigen Eiproduktes in einen Behälter, während das flüssige Eiprodukt auf der Temperaturstufe gehalten wird;

   Verschließen des Behälters auf eine im Wesentlichen luftdichte Weise, um eine Lagerung des flüssigen Eiproduktes zu ermöglichen;

Weitergabe des verschlossenen Behälters zu einem Erhitzer, um die weitere Pasteurisierung des erhitzten flüssigen Eiproduktes in der Verpackung zu ermöglichen;

Fortfahren die Temperatur des erhitzten flüssigen Eiproduktes in dem Behälter auf der Temperaturstufe für eine erste vorbestimmte Zeitspanne, die nicht länger als 60 Minuten dauert, beizubehalten, um die Pasteurisierung des flüssigen Eiproduktes abzuschließen; und

Kühlen des pasteurisierten flüssigen Eiproduktes für eine zweite vorbestimmte Zeitspanne auf eine Kühltemperatur zwischen 5°C und - 2°C.

2. Ein Verfahren gemäß Anspruch 1 des weiteren umfassend:

Hinzufügen eines chemischen Sterilisators nach dem Schritt des Zubereitens eine bestimmten Menge des rohen flüssigen Einproduktes.

3. Ein Verfahren gemäß Anspruch 1, wobei das flüssige Eiprodukt auf der Temperaturstufe gehalten wird, indem das flüssige Eiprodukt in dem Behälter zu einer thermischen Lagerkammer transportiert wird.

4. Ein Verfahren gemäß einem der Ansprüche 1 oder 3 des weiteren umfassend:

Transportieren des gekühlten flüssigen Eiproduktes in dem Behälter zu einem Kühlschrank, um die Temperatur des flüssigen Eiprodukts im Wesentlichen auf der Kühltemperatur zu halten, um die Kühlhaltbarkeit zu verlängern.

5. Ein Verfahren gemäß einem der vorausgehenden Ansprüche, wobei sich die Temperaturstufe zwischen 65°C und 67°C befindet, und/oder wobei die erste vorbestimmte Zeitspanne zwischen 20 Minuten und 60 Minuten beträgt, vorzugsweise zwischen 20 Minuten und 30 Minuten.

6. Ein Verfahren gemäß einem der vorausgehenden Ansprüche, weiter umfassend:

Bewegen des Behälters während des Schrittes, die Temperatur des erhitzten flüssigen Eiprodukts in dem Behälter auf der Temperaturstufe zu halten und/oder Bewegen des Behälters während mindestens eines Teils der zweiten vorbestimmten Zeitspanne, um dabei zu helfen, das flüssige Eiprodukt einheitlich zu kühlen.

7. Ein Verfahren gemäß einem der vorausgehenden Ansprüche, des weiteren umfassend:

Ausüben eines Druckes auf den Behälter während des Schrittes, die Temperatur des Behälters zu halten.

8. Ein Verfahren gemäß einem der vorausgehenden Ansprüche, des weiteren umfassend:

hinzufügen einer bestimmten Menge einer bakterienzerstörenden Einheit zu dem flüssigen Eiprodukt, bevor das flüssige Eiprodukt erhitzt wird.

9. Ein Verfahren gemäß einem der vorausgehenden Ansprüche, wobei die zweite vorbestimmte Zeitspanne nicht mehr als die 17 Minuten beträgt.

10. Ein Verfahren gemäß einem der vorausgehenden Ansprüche, des weiteren umfassend:

Bewegen des flüssigen Eiprodukts während des Schrittes, das flüssige Eiprodukt zu erhitzen.

11. Ein Heißabfüllverfahren, um den Produktionsdurchsatz in der Verarbeitung von rohen flüssigen Eiprodukten zu steigem, um deren Kühlhaltbarkeit auf mindestens 36 Wochen zu erhöhen, umfassend:

Vorwärmen des flüssigen Eiproduktes auf eine vorgeheizte Temperatur zwischen 71°C und 55° C, die sich als ausreichend erweist, um eine Produktpasteurisierung zu ermöglichen;

Vorwärmen eines Produktbehälters auf eine Wärmeübertragungstemperatur zwischen 71°C und 55°C, die sich als ausreichend erweist, die Temperaturhaltezeiten in einen Pasteurisierungsverfahren erheblich zu reduzieren;

Verpacken des vorgewärmten flüssigen Eiproduktes in einen vorgewärmten Produktbehälter, während das vorgewärmte flüssige Eiprodukt vor dem Abkühlen auf eine Temperatur unterhalb des Bereiches der vorgeheizten Temperatur bewahrt wird;

Halten des verpackten flüssigen Eiproduktes bei einer konstanten Pasteurisierungstemperatur zwischen 71°C und 55°C für eine Haltezeitdauer, die zwischen 30 Sekunden und 2071 Sekunden liegt; und

schnelles Entfernen einer ausreichenden Menge von thermischen Energie aus dem Behälter und dem flüssigen Eiprodukt in einer Kühlzeitdauer zwischen 5 Minuten und 120 Minuten, um das verpackte flüssige Eiprodukt bei einer Kühltemperatur zwischen 5°C und - 2°C zu stabilisieren, ohne das flüssige Eiprodukt einzufrieren.

**12.** Ein Heißabfüllverfahren gemäß Anspruch 11, wobei der Produktbehälter, der vorgewärmt ist, ein nicht aseptischer Behälter ist, und der Behälter, nachdem er befüllt wurde, verschlossen wird.

**13.** Ein Heißabfüllverfahren gemäß Anspruch 11, wobei das flüssige Eiprodukt ein Eigelbprodukt ist; und wobei die vorgeheizte Temperatur und die Wärmeübertragungstemperatur zwischen 71°C und 60°C liegen und wobei die Haltezeitdauer zwischen 81 Sekunden 2071 Sekunden beträgt.

**14.** Ein Heißabfüllverfahren gemäß Anspruch 11, wobei das flüssige Eiprodukt ein Einweißprodukt ist und wobei die vorgeheizte Temperatur und die Wärmeübertragungstemperatur zwischen 59°C und 55°C liegen.

**15.** Ein Heißabfüllverfahren gemäß Anspruch 13, wobei das flüssige Eiprodukt ein Eigelbprodukt ist; und wobei die Haltezeitdauer zwischen 30 Sekunden und 450 Sekunden liegt.

**16.** Ein Heißabfüllverfahren gemäß dem Anspruch 11 oder Anspruch 12, wobei das flüssige Eiprodukt ein ungesalzenes flüssiges Eiprodukt oder ein flüssiges Eiprodukt ist, das eine kleine Menge Salz zwischen 0.1 % nach Volumen und 0.15% nach Volumen beinhaltet.

**17.** Ein Heißabfüllverfahren gemäß einem der Ansprüche 11 bis 16, wobei eine bevorzugtere Kühltemperatur zwischen 0°C und 5°C und/oder wobei eine bevorzugtere Kühltemperaturzeitspanne zwischen 10 Minuten und 45 Minuten beträgt.

**18.** Ein Verfahren gemäß Anspruch 11, wobei die verlängerte Kühlhaltbarkeit eine Zeitspanne von mehr als 10 Wochen umfasst.

**Revendications**

**1.** Procédé pour prolonger la durée de conservation d'un produit liquide brut à base d'oeufs, comprenant les étapes consistant à :

préparer un volume donné du produit liquide brut à base d'oeufs en vue d'une consommation ultérieure ; chauffer le produit liquide brut à base d'oeufs à un niveau de température d'au moins 57°C de façon que la pasteurisation du produit liquide brut à base d'oeufs commence ; pomper le volume donné du produit liquide brut à base d'oeufs chauffé dans un récipient tout en maintenant le produit liquide à base d'oeufs audit niveau de température ; boucher le récipient de façon pratiquement étanche à l'air afin de faciliter le stockage du produit liquide à base d'oeufs ; transférer le récipient bouché dans un appareil chauffant afin de faciliter davantage la pasteurisation dans l'emballage du produit liquide à base d'oeufs chauffé ; continuer à maintenir la température du produit liquide à base d'oeufs chauffé dans le récipient audit niveau de température pendant une première durée prédéterminée non supérieure à 60 minutes afin d'achever la pasteurisation du produit liquide à base d'oeufs ; et refroidir le produit liquide à base d'oeufs pasteurisé pendant une deuxième durée prédéterminée à une température de réfrigération dans la plage de 5°C à -2°C.

**2.** Procédé selon la revendication 1, comprenant en plus l'étape consistant à :

ajouter une substance chimique stérilisante après l'étape de préparation du volume donné du produit liquide brut à base d'oeufs.

**3.** Procédé selon la revendication 1, dans lequel le produit liquide à base d'oeufs est maintenu audit niveau de température en transportant le produit liquide à base d'oeufs à l'intérieur du récipient dans une chambre de maintien en température.

**4.** Procédé selon l'une quelconque de la revendication 1 ou de la revendication 3, comprenant en plus l'étape consistant à :

transporter le produit liquide à base d'oeufs refroidi à l'intérieur du récipient dans un réfrigérateur afin de maintenir pratiquement la température du produit liquide à base d'oeufs à la température de réfrigération pendant une durée de conservation prolongée.

**5.** Procédé selon l'une quelconque des revendications précédentes, dans lequel le niveau de température se situe entre 65°C et 67°C, et/ou dans lequel la première durée prédéterminée se situe entre 20 minutes et 60 minutes, de préférence entre 20 minutes et 30 minutes.

**6.** Procédé selon l'une quelconque des revendications précédentes, comprenant en plus l'étape consistant à :

agiter le récipient pendant l'étape de maintien de la température du produit liquide à base d'oeufs chauffé dans le récipient au niveau de température et/ou agiter le récipient pendant au moins une partie de la deuxième durée prédéterminée afin d'aider à refroidir de manière uniforme le produit liquide à base d'oeufs.

**7.** Procédé selon l'une quelconque des revendications précédentes, comprenant en plus l'étape consistant à :

appliquer une pression au récipient pendant l'étape de maintien de la température du récipient.

**8.** Procédé selon l'une quelconque des revendications précédentes, comprenant en plus l'étape consistant à :

ajouter un volume donné d'une entité détruisant des bactéries au produit liquide à base d'oeufs avant de chauffer le produit liquide à base d'oeufs.

**9.** Procédé selon l'une quelconque des revendications précédentes, dans lequel la deuxième durée prédéterminée n'est pas supérieure à 17 minutes.

**10.** Procédé selon l'une quelconque des revendications précédentes, comprenant en plus l'étape consistant à :

agiter le produit liquide à base d'oeufs pendant l'étape de chauffage du produit liquide à base d'oeufs.

**11.** Procédé de remplissage à chaud pour augmenter la cadence de production dans le traitement de produits liquides bruts à base d'oeufs afin d'augmenter leur durée de conservation réfrigérée à au moins 36 semaines, comprenant les étapes consistant à :

préchauffer le produit liquide à base d'oeufs à une température préchauffée comprise entre 71 °C et 55°C, qui est suffisante pour faciliter la pasteurisation d'un produit ;
préchauffer un récipient de produit à une température de transfert de chaleur comprise entre 71°C et 55°C, qui est suffisante pour réduire de manière significative les durées de maintien en température dans un procédé de pasteurisation ;
emballer le produit liquide à base d'oeufs préchauffé dans le récipient de produit préchauffé tout en empêchant le refroidissement du produit liquide à base d'oeufs préchauffé à une température inférieure à l'intervalle de ladite température préchauffée ;
maintenir le produit liquide à base d'oeufs emballé à une température de pasteurisation constante (15) comprise entre 71°C et 55°C pendant une durée de maintien comprise entre 30 secondes et 2071 secondes ; et
enlever rapidement une quantité d'énergie thermique suffisante du récipient et du produit liquide à base d'oeufs pendant une durée de refroidissement comprise entre 5 minutes et 120 minutes afin de stabiliser le produit liquide à base d'oeufs emballé à une température de réfrigération comprise entre 5°C et -2°C sans congeler le produit liquide à base d'oeufs.

12. Procédé de remplissage à chaud selon la revendication 11, dans lequel le récipient de produit qui est préchauffé est un récipient non aseptique et le récipient est bouché après qu'il a été rempli.

13. Procédé de remplissage à chaud selon la revendication 11, dans lequel ledit produit liquide à base d'oeufs est un produit à base de jaune d'oeuf, dans lequel ladite température préchauffée et ladite température de transfert de chaleur se situent chacune entre 71°C et 60°C, et dans lequel ladite durée de maintien se situe entre 81 secondes et 2071 secondes.

14. Procédé de remplissage à chaud selon la revendication 11, dans lequel ledit produit liquide à base d'oeufs est un produit à base de blanc d'oeuf, et dans lequel ladite température préchauffée et ladite température de transfert de chaleur se situent chacune entre 59°C et 55°C.

15. Procédé de remplissage à chaud selon la revendication 13, dans lequel ledit produit liquide à base d'oeuf est un produit à base de jaune d'oeuf, et dans lequel ladite durée de maintien se situe entre 30 secondes et 450 secondes.

16. Procédé de remplissage à chaud selon la revendication 11 ou la revendication 12, dans lequel ledit produit liquide à base d'oeufs est un produit liquide non salé à base d'oeufs ou est un produit liquide à base d'oeufs comprenant une petite quantité de sel comprise entre 0,1% en volume et 0,15% en volume.

17. Procédé de remplissage à chaud selon l'une quelconque des revendications 11 à 16, dans lequel une température de réfrigération davantage préférée se situe entre 0°C et 5°C et/ou dans lequel une durée de refroidissement davantage préférée se situe entre 10 minutes et 45 minutes.

18. Procédé selon la revendication 11, dans lequel la durée de conservation prolongée est supérieure à 10 semaines.

Fig.1

Fig.2